# EUROPÄISCHE PATENTANMELDUNG

(11) **EP 1 886 788 A1**
(43) Veröffentlichungstag der Anmeldung: **13.02.2008**
(21) Anmeldenummer: 06118604.5
(22) Anmeldetag: 08.08.2006
(51) Int. Cl.: B29C 45/14

(54) **Verfahren zum Umformen und Beschichten von Rohstofflagen**

(71) Anmelder: Novem Car Interior Design GmbH, 95519 Vorbach (DE)
(72) Erfinder: Manzoni, Antonio, 24060 Bagnatica (BG) (IT); Kumpf, Karl-August, 24060 Torre De Roveri (BG) (IT); Egerer, Gerhard, 92724 Trabitz (DE)
(74) Vertreter: Szynka, Dirk

(57) **Zusammenfassung**

Die Erfindung bezieht sich auf ein Verfahren zur Herstellung eines Auskleidungsteils für Motorfahrzeuge mit den Schritten: Einbringen einer Rohstofflage (1) in ein Spritzgießwerkzeug (11), so dass zumindest ein Teil der Oberfläche der Rohstofflage (1) an eine Kavität (6, 9) des geschlossenen Spritzgießwerkzeuges (11) angrenzt, und Einbringen eines Spritzgießmaterials in die Kavität (6, 9). Dabei wird die Rohstofflage (1) unter Druck und Wärmezufuhr in dem Spritzgießwerkzeug (11) umgeformt.

## Beschreibung

Die vorliegende Erfindung bezieht sich auf ein Verfahren zur Herstellung eines Auskleidungsteils für Motorfahrzeuge.

Auskleidungsteile für Motorfahrzeuge sind weit verbreitet. Sie finden insbesondere bei der Inneneinrichtung von Motorfahrzeugen Anwendung. Ein typisches Auskleidungsteil ist etwa ein eine Holzmaserung aufweisendes Dekorationselement für ein Armaturenfeld in einem Auto. Unter dem Wort "Motorfahrzeug" werden hier alle motorisierten Land-, Wasser- oder Luftfahrzeuge mit einem Innenraum zur Beförderung von Personen, welcher typischerweise solche Auskleidungsteile aufweist, verstanden.

Üblicherweise weisen solche Auskleidungsteile einen geformten und beschichteten Rohling auf. Ein solcher kann eine, aber auch mehrere Lagen aufweisen, welche in einem Presswerkzeug geformt bzw. ggf. auch mit einem Kleber verbunden werden können. Die Rohstofflage bzw. die verschiedenen Rohstofflagen des Rohlings verleihen diesem die gewünschten mechanischen Eigenschaften und beeinflussen meist auch den optischen Eindruck des fertigen Auskleidungsteils.

Der Rohling kann etwa mit Hilfe eines Spritzgießwerkzeuges mit einer Oberflächenschicht versehen werden. Wird die Seite des Rohlings beschichtet, welche beim fertigen eingebauten Auskleidungsteil sichtbar ist, so spricht man von einem Überspritzen; bei der anderen - nicht sichtbaren - Seite spricht man von einem Hinterspritzen. Auskleidungsteile können etwa hinterspritzt sein, um ihnen eine größere Stabilität zu verleihen oder Montageelemente auszubilden; sie können überspritzt sein, um eine bestimmte Oberflächenbeschaffenheit der im eingebauten Zustand sichtbaren Seite des Auskleidungsteils herzustellen.

Spritzgießwerkzeuge sind so gebaut, dass sie im geschlossenen Zustand den Rohling umfassen und der Teil der Oberfläche des Rohlings, welcher beschichtet werden soll, an eine Kavität des geschlossenen Spritzgießwerkzeugs angrenzt. Diese Kavität wird dann mit dem Spritzgießmaterial gefüllt; im Anschluss daran (gegebenenfalls nach einer Aushärtezeit) kann das Spritzgießwerkzeug geöffnet und der beschichtete Rohling entnommen werden.

Der vorliegenden Erfindung liegt das technische Problem zugrunde, ein verbessertes Verfahren zur Herstellung eines Auskleidungsteils für Motorfahrzeuge anzugeben.

Die Erfindung bezieht sich auf ein Verfahren zur Herstellung eines Auskleidungsteils für Motorfahrzeuge mit den Schritten: Einbringen einer Rohstofflage in ein Spritzgießwerkzeug, so dass zumindest ein Teil der Oberfläche der Rohstofflage an eine Kavität des geschlossenen Spritzgießwerkzeuges angrenzt, und Einbringen eines Spritzgießmaterials in die Kavität, gekennzeichnet durch den Schritt: Umformen der Rohstofflage unter Druck und Wärmezufuhr in dem Spritzgießwerkzeug.

Bevorzugte Ausgestaltungen der Erfindung sind in den abhängigen Ansprüchen angegeben und werden im Folgenden näher erläutert. Die Offenbarung bezieht sich dabei stets sowohl auf das erfindungsgemäße Verfahren als auch grundsätzlich auf Spritzgießwerkzeuge zur Durchführung des erfindungsgemäßen Verfahrens.

Die Erfindung basiert auf der Feststellung, dass das Umformen eines Rohlings in einem Presswerkzeug unter Druck, ggf. auch unter Zufuhr von Wärme, erfolgt. Sie basiert auf der weiteren Feststellung, dass beim Spritzgießen das Spritzgießmaterial unter Druck und auch mit erhöhter Temperatur eingebracht wird.

Die der Erfindung zugrunde liegende Idee ist, das Umformen des Rohlings mit dem Spritzgießen zu verbinden. Dazu wird eine Rohstofflage in ein Spritzgießwerkzeug eingebracht. Diese liegt bei geschlossenem Spritzgießwerkzeug mit einem Teil ihrer Oberfläche an einer Kavität desselben an. In die Kavität wird das Spritzgießmaterial eingebracht. Bei geschlossenem Spritzgießwerkzeug wird dann die Rohstofflage unter Druck und Wärmezufuhr umgeformt.

Die Wärme wird dem Stapel dabei über das erwärmte Spritzgießmaterial zugeführt. Es kann aber etwa auch das Spritzgießwerkzeug zusätzlich erwärmt werden. Der Druck kann bei dem und durch das Einbringen des Spritzgießmaterials auf den Stapel ausgeübt werden. Er kann aber auch unabhängig vom Einbringen des Spritzgießmaterials erzeugt werden. Dazu kann beispielsweise zunächst das Spritzgießmaterial in die Kavität eingebracht, können vorhandene Zu- und Abflüsse für das Spritzgießmaterial geschlossen und kann dann über das Spritzgießwerkzeug der Stapel umgeformt werden.

Das erfindungsgemäße Verfahren eignet sich sowohl für das Über- als auch das Hinterspritzen, und für die Kombination aus beidem. Für das Überspritzen werden üblicherweise transparente Kunststoffe verwendet, etwa transparente Thermoplaste wie PMMA (Polymethylmetacrylat), PC (Polycarbonat) und SAN (Styrol/Acrylnitril). Wird der Rohling nur überspritzt, wird er oft auf seiner anderen Seite noch mit einem Träger versehen, etwa einem Träger aus Metall, beispielsweise Aluminium, oder aus Kunststoff. Der Träger kann dem Auskleidungsteil zusätzliche Stabilität verleihen.

Für das Hinterspritzen können nichttransparente Kunststoffe verwendet werden, da sie beim eingebauten Auskleidungsteil der Sichtseite abgewandt sind. Es empfiehlt sich, hier technische Kunststoffe mit einem hohen E-Modul zu verwenden, um ein hinreichend stabiles Auskleidungsteil herzustellen. Dies können etwa ABS (AcrylnitrilButadien-Styrol-Copolymerisat) oder ABS/PC-Kunststoffe sein. Wird der Rohling sowohl über- als auch hinterspritzt, kann für beide Seiten das gleiche Material verwendet werden. Dies ist jedoch nicht notwendig der Fall.

Der Rohling kann eine bzw. mehrere Rohstofflage/n aus verschiedensten Materialien aufweisen, etwa Holzfurniere, wobei auch die Verwendung mehrerer, auch unterschiedlicher, Holzfurniere in einem Stapel sinnvoll sein kann, etwa als Deckfurnier und als Unterfurnier. Das Deckfurnier bestimmt dabei wesentlich das spätere Erscheinungsbild des Auskleidungsteils mit, während das Unterfurnier Einfluss auf die mechanischen Eigenschaften des Auskleidungsteils nimmt. Der Stapel kann aber auch beispielsweise Blechfolien, Holzfasermatten und Kunststofffolien aufweisen, welche je nach den gewünschten mechanischen und ästhetischen Eigenschaften eher zur Stabilisierung des Auskleidungsteils oder eher zur ästhetischen Ausgestaltung desselben eingebracht werden.

Die Erfindung macht die gesonderte Umformung eines Rohlings in einem Presswerkzeug vor dem Spritzgießen in einem Spritzgießwerkzeug überflüssig. Das Umformen des Rohlings und das Spritzgießen können nun zusammen in einem einzigen Werkzeug durchgeführt werden.

Weist der zu fertigende Rohling mehrere Rohstofflagen auf, so ist es bevorzugt, einen solchen Rohstofflagenstapel in dem Spritzgießwerkzeug auch zu verkleben. Dazu werden die einzelnen Rohstofflagen zunächst lose aneinandergelegt, wobei zwischen zumindest zwei Rohstofflagen ein Kleber eingebracht ist. Der so aufgeschichtete Stapel liegt bei geschlossenem Spritzgießwerkzeug mit einem Teil seiner Oberfläche an einer Kavität desselben an. Wie oben wird in diese Kavität das Spritzgießmaterial eingebracht. Bei geschlossenem Spritzgießwerkzeug werden dann die zuvor noch unverbundenen Rohstofflagen des Stapels unter Druck und Wärmezufuhr miteinander verklebt.

"Unverbunden" steht hier nicht nur für ein loses Aneinanderanliegen von Rohstofflagen, sondern umfasst beispielsweise auch den Fall, dass etwa der zwischen den Rohstofflagen befindliche Kleber den Stapel bereits locker oder nur an einzelnen Stellen zusammenhält. Das Wort "unverbunden" bezeichnet hier jeden Zusammenhalt des Stapels, welcher deutlich weniger belastbar ist als der eines fertig verklebten Stapels.

Sinnvollerweise wird das Verkleben des Stapels gleichzeitig mit dem Umformen desselben durchgeführt.

Auskleidungsteile, welche eine Holzmaserung zeigen, sind besonders beliebt. Weiter sind Holzfurniere als Rohstofflage für das erfindungsgemäße Verfahren überhaupt geeignet. Dies gilt sowohl für den Einsatz eines Holzfurnieres alleine als auch als Deckfurnier in einem Stapel und auch für den Einsatz als ein innerhalb eines Stapels liegendes Unterfurnier, welches die Stabilität des Auskleidungsteils mitbestimmt. Daher ist es bevorzugt, Holzfurniere als Rohstofflage zu verwenden.

Wird ein Stapel mit Rohstofflagen in einem Spritzgießwerkzeug verklebt, so wird vorzugsweise ein Trockenklebefilm zwischen den Rohstofflagen eingesetzt. Dies können etwa Kunstharzklebefilme sein, etwa Klebefilme auf Phenol-, Melamin- oder Harnstoffbasis. Trockenklebefilme sind besonders leicht zu handhaben.

Vorzugsweise sollte die Rohstofflage bzw. der Stapel mit den Rohstofflagen einem Druck von zumindest 1,5 N/mm² ausgesetzt sein. Bevorzugter ist ein Druck von zumindest 2 N/mm². Entsprechende Drücke haben sich in Versuchen bewährt.

Es ist bevorzugt, der Rohstofflage bzw. dem Stapel mit den Rohstofflagen Wärme über erwärmtes Spritzgießmaterial zuzuführen. Vorzugsweise beträgt die Temperatur des Spritzgießmaterials dabei zwischen 130 °C und 390 °C. Bevorzugter ist eine Temperatur zwischen 190 °C und 330 °C und noch bevorzugter eine Temperatur zwischen 240 °C und 280 °C. Idealerweise weist das eingebrachte Spritzgießmaterial eine Temperatur zwischen 250 °C und 270 °C auf.

Der Rohstofflage bzw. dem Stapel mit den Rohstofflagen kann auch über das Werkzeug selbst Wärme zugeführt werden. Vorzugsweise weist das Spritzgießwerkzeug eine Temperatur zwischen 60 °C und 190 °C auf. Bevorzugter weist es eine Temperatur zwischen 90 °C und 160 °C auf. Noch bevorzugter weist es eine Temperatur zwischen 110 °C und 140 °C auf. Idealerweise beträgt die Temperatur des Spritzgießwerkzeugs zwischen 120 °C und 130 °C.

Es hat sich bewährt, die Rohstofflage bzw. den Stapel mit den Rohstofflagen für zumindest 120 s bei erhöhter Temperatur unter Druck zu setzen.

Damit die Rohstofflage bzw. der Stapel mit den Rohstofflagen und ggf. die Trockenklebefilme nicht vor ihrer Verklebung und Beschichtung exakt in Form geschnitten werden müssen, ist es vorteilhaft, wenn die Rohstofflage bzw. der Stapel mit den Rohstofflagen mit dem Spritzgießwerkzeug selbst in Form geschnitten wird. Dazu kann das Spritzgießwerkzeug eine scharfe Kante aufweisen, welche beim Schließen desselben überflüssige Teile der Rohstofflage bzw. des Stapels mit den Rohstoffiagen abtrennt.

Im Folgenden soll die Erfindung anhand von Ausführungsbeispielen näher erläutert werden. Die dabei offenbarten Einzelmerkmale können auch in anderen Kombinationen erfindungswesentlich sein.
- Figur 1: zeigt ein erfindungsgemäßes Spritzgießwerkzeug zum Hinterspritzen mit Ober- und Unterform und einen Stapel Rohstofflagen zur erfindungsgemäßen Herstellung eines Auskleidungsteiles.
- Figur 2: zeigt das Spritzgießwerkzeug aus Figur 1 in seinem geschlossenen Zustand.
- Figur 3: zeigt ein hinterspritztes Auskleidungsteil als Erzeugnis des erfindungsgemäßen Verfahrens unter Verwendung des Spritzgießwerkzeuges aus den Figuren 1 und 2.
- Figur 4: entspricht Figur 2 mit dem Unterschied, dass das ebenfalls erfindungsgemäße Spritzgießwerkzeug zum Überspritzen ausgelegt ist.
- Figur 5: zeigt ein überspritztes Auskleidungsteil als Erzeugnis des erfindungsgemäßen Verfahrens unter Verwendung des Spritzgießwerkzeuges aus Figur 4.
- Figur 6: entspricht den Figuren 2 und 4 mit dem Unterschied, dass das Spritzgießwerkzeug zum Über- und Hinterspritzen ausgelegt ist.
- Figur 7: zeigt ein über- und hinterspritztes Auskleidungsteil als Erzeugnis des erfindungsgemäßen Verfahrens unter Verwendung des Spritzgießwerkzeuges aus Figur 6.

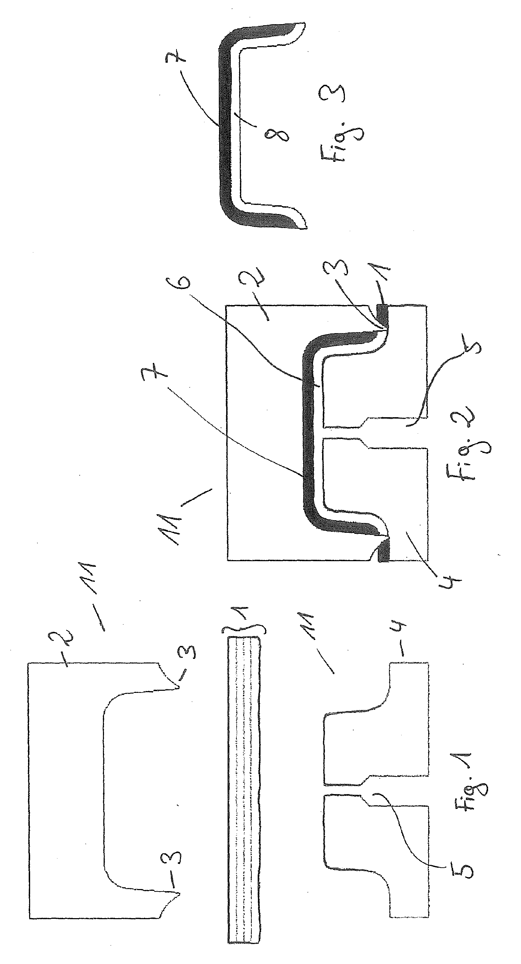

Figur 1 zeigt mittig einen Stapel 1 Rohstofflagen, welche lose aufeinander liegen. Zu oberst befindet sich ein hölzernes Deckfurnier und darunter drei hölzerne Unterfurniere. Zwischen den Furnieren ist jeweils ein Melaminkunstharzklebefilm eingelegt.

Oberhalb des Stapels 1 ist eine Oberform 2 eines Spritzgießwerkzeugs 11 dargestellt. Der Begriff "Oberform" zeigt lediglich an, dass sie auf der Seite des Stapels 1 liegt, welche bei dem fertigen Ausstattungsteil dem Betrachter zugewandt ist. Die Oberform 2 weist zwei scharfe Kanten 3 auf. Unten ist eine Unterform 4 dargestellt. Die "Unterform" 4 liegt als Gegenstück der "Oberform" 2 auf der Seite des Stapels 1, welche bei dem fertigen Auskleidungsteil dem Betrachter abgewandt ist.

Die Unterform 4 weist hier eine Spritzgießdüse 5 zum Einbringen von Spritzgießmaterial auf. Zunächst wird der Stapel 1 zwischen der Oberform 2 und der Unterform 4 positioniert und werden dann die Oberform 2 und die Unterform 4 zusammengeführt.

Dabei drückt die Oberform 2 den Stapel 1 gegen die Unterform 4 und trennen die Kanten 3 überflüssige Teile des Stapels 1 ab (sog. Abzwicken).

Figur 2 zeigt das Spritzgießwerkzeug 11 aus Figur 1 im geschlossenen Zustand. Die Oberform 2 liegt nun auf der Unterform 4 auf und die Kanten 3 haben von dem Stapel 1 jeweils den überschüssigen Teil abgetrennt.

Zum Spritzgießen wird hier durch die Spritzgießdüse 5 260 °C heißes ABS mit einem Druck von 4,0 N/mm² in eine unterformseitig gelegene Kavität 6 des Spritzgießwerkzeuges eingebracht. Die Oberform 2 und die Unterform 4 weisen dabei eine Temperatur von 125 °C auf. Der Druck in der Kavität 6 wird 240 s gehalten. Im Anschluss daran ist parallel zu dem Aushärten der Spritzgussmasse aus dem losen Stapel 1 ein wunschgemäß geformter und innig verklebter Verbund 7 geworden. Dieser Verbund 7 ist in Figur 2 gezeigt.

Figur 3 zeigt das Erzeugnis des anhand Figur 2 erläuterten Verfahrens. Der Verbund 7 ist mit einer ABS-Schicht 8 hinterspritzt.

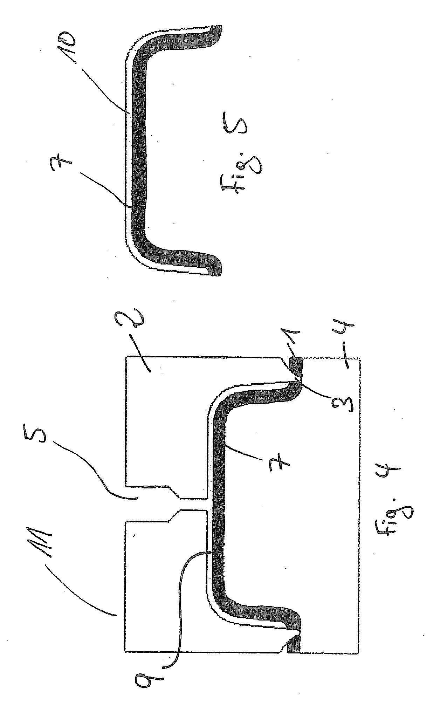

Figur 4 zeigt wie Figur 2, unter Beibehaltung der Bezugszeichen für einander entsprechende Merkmale, ein Spritzgießwerkzeug 11 mit einer Oberform 2, einer Unterform 4, einer Spritzgießdüse 5 und Kanten 3 an der Oberform 2. Im Unterschied zu Figur 2 befindet sich die Spritzgießdüse 5 nun in der Oberform 2, entsprechend ist in diesem Spritzgießwerkzeug 11 eine Kavität 9 oberformseitig zum Überspritzen ausgebildet. Bei diesem Spritzgießwerkzeug wird durch die Spritzgießdüse 5 PMMA in die Kavität 9 eingebracht. Ansonsten gilt das zu Figur 2 Gesagte.

Figur 5 zeigt einen mit einer PMMA-Schicht 10 überspritzten Verbund 7.

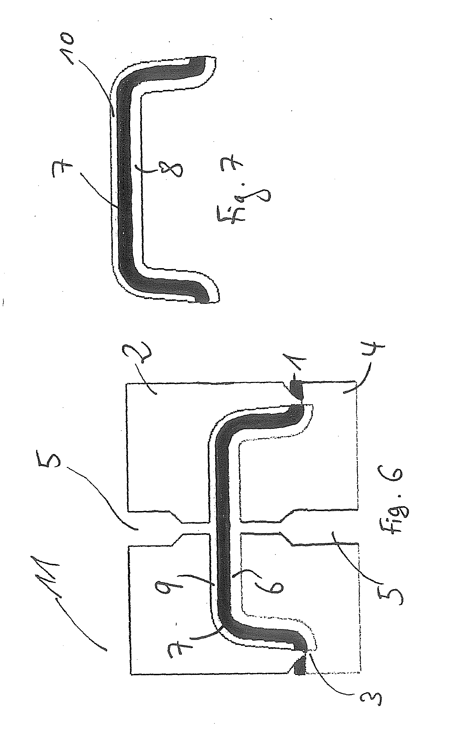

Figur 6 zeigt ein Spritzgießwerkzeug 11, welches zum Über- und Hinterspritzen ausgelegt ist. Bezugszeichen, welche sich auf entsprechende Merkmale aus den Figuren 2 und 4 beziehen, werden aus diesen übernommen. Auch hier ist ein Spritzgießwerkzeug mit einer Oberform 3 und einer Unterform 4 gezeigt. Hier weisen sowohl die Oberform 2 als auch die Unterform 4 jeweils eine Spritzgießdüse 5 auf. Die Spritzgießdüse 5 der Oberform 3 mündet in eine Kavität 9 und die Spritzgießdüse 5 der Unterform 4 mündet in eine Kavität 6. Zwischen den Kavitäten 6 und 9 ist ein wie oben beschriebener Verbund 7 eingezeichnet. Für das Überspritzen gilt das zu Figur 4 Gesagte und für das Hinterspritzen das zu Figur 2 Gesagte.

Die Darstellung dieses Spritzgießwerkzeuges 11 ist stark vereinfacht. Die beiden Kavitäten 6 und 9 werden aufeinander folgend gebildet. Für ein beidseitiges Beschichten kann etwa eine der Formen ausgetauscht werden (vgl. auch die DE 43 01 444 C2).

Figur 7 zeigt ein mit dem Spritzgießwerkzeug aus Figur 6 hergestelltes Auskleidungsteil, bei dem der Verbund 7 mit PMMA überspritzt 10 und mit ABS hinterspritzt 8 ist.

## Patentansprüche

1. Verfahren zur Herstellung eines Auskleidungsteils für Motorfahrzeuge mit den Schritten:
Einbringen einer Rohstofflage (1) in ein Spritzgießwerkzeug (11), so dass zumindest ein Teil der Oberfläche der Rohstofflage (1) an eine Kavität (6, 9) des geschlossenen Spritzgießwerkzeuges (11) angrenzt, und
Einbringen eines Sprüzgießmaterials in die Kavität (6, 9),
**gekennzeichnet durch** den Schritt:
Umformen der Rohstofflage unter Druck und Wärmezufuhr in dem Spritzgießwerkzeug (11).

2. Verfahren nach Anspruch 1, bei dem zumindest zwei Rohstofflagen (1) mit einem Kleber zwischen den Rohstofflagen (1) in das Spritzgießwerkzeug (11) eingebracht werden, so dass die Rohstofflagen (1) in dem Spritzgießwerkzeug (11) einen Stapel (1) bilden und zumindest ein Teil der Oberfläche des Stapels (1) an die Kavität (6, 9) des geschlossenen Spritzgießwerkzeuges (11) angrenzt, mit dem Schritt: Verkleben der vor dem Einbringen des Spritzgießmaterials noch unverbundenen Rohstofflagen (1) des Stapels (1) in dem Spritzgießwerkzeug.

3. Verfahren nach einem der vorangehenden Ansprüche, bei dem die Rohstofflage ein Holzfurnier ist.

4. Verfahren nach Anspruch 2, auch in Kombination mit Anspruch 3, bei dem der Kleber ein Trockenklebefilm ist.

5. Verfahren nach einem der vorangehenden Ansprüche, bei dem die Rohstofflage (1) einem Druck von zumindest 1,5 N/mm² ausgesetzt wird.

6. Verfahren nach einem der vorangehenden Ansprüche, bei dem die Temperatur des eingebrachten Spritzgießmaterials zwischen 130 °C und 390°C beträgt.

7. Verfahren nach einem der vorangehenden Ansprüche, bei dem die Temperatur des Spritzgießwerkzeugs (11) zwischen 60 °C und 190 °C beträgt.

8. Verfahren nach einem der vorangehenden Ansprüche, bei dem der Rohstofflage (1) für zumindest 120 s Wärme zugeführt wird und sie zeitgleich für 120 s unter Druck gesetzt wird.

9. Verfahren nach einem der vorangehenden Ansprüche, bei dem die Rohstofflage (1) mit dem Spritzgießwerkzeug (11) auf die gewünschte Ausdehnung zugeschnitten wird.
